# EUROPEAN PATENT SPECIFICATION

(11) **EP 1 565 816 B1**
(45) Date of publication and mention of the grant of the patent: **18.11.2015**
(21) Application number: 03719047.7
(22) Date of filing: 09.04.2003
(51) Int. Cl.: G06F 9/54

(54) **LINKING DATA OBJECTS TO A PROJECT DEVELOPMENT SYSTEM**
VERBINDUNG VON DATENOBJEKTEN MIT EINEM PROJEKTENTWICKLUNGSSYSTEM
RATTACHEMENT D'OBJETS DE DONNEES A UN SYSTEME D'ELABORATION DES PROJETS

(30) Priority: 09.04.2002 US 371525 P; 29.04.2002 US 133632
(43) Date of publication of application: 24.08.2005
(73) Proprietor: SAP SE, 69190 Walldorf (DE)
(72) Inventor: HAGMANN, Thomas, 69168 Wiesloch (DE); STINDL, Manfred, 69168 Wiesloch (DE); KRENZKE, Ralf, 68789 St. Leon-Rot (DE)
(74) Representative: Müller-Boré & Partner Patentanwälte PartG mbB
(86) International application number: PCT/IB2003/001902
(87) International publication number: WO 2003/085523

(56) References cited:
- US-A- 5 539 909
- US-A- 5 729 745
- US-A- 5 838 970

## Description

### BACKGROUND

This invention relates to data objects and project development systems.

Project development systems allow a user to, e. g. , develop and manage a project.

These systems support various sorts of projects including marketing projects, product design projects, product manufacturing projects, consulting projects, development projects, and any combination thereof. Project development systems usually include project development applications and computing devices.

Project development systems often use a project structure to describe projects. In general, a project structure maps real-world aspects of a project, such as deadlines and tasks, into an electronically accessible format. For example, many project development systems describe a start, finish, and other schedule dates of a project, the tasks that are performed and the results that are achieved during the project, and the data objects that are generated by the project or used to complete the project.

US 5,729,745 discloses a method and apparatus for creating a base class and derived classes in an object-oriented computer programming environment that allows an application program to manipulate external data collections in a similar manner.

### SUMMARY

The present invention provides methods and apparatus, including computer program products, for linking data objects of different systems as defined in the independent claims. The data objects can be linked to a project structure that represents a project.

In general, in one aspecta method for linking data objects maintained by more than one source application in more than one remote systems comprises:
defining a first link to a first data object maintained by a first source application in a first system, said first link including information specifying a location of the first data object;
defining a second link to a second data object maintained by a second source application in a second system, said second link including information specifying a location of the second data object; and
accessing data from the first data object using the first link and accessing data from the second data object using the second link upon data requests from a project development application.

The method is characterized in that the first defined link and the second defined link each includes:
a search function field identifying distinguishing characteristics of the respective linked data object that can be used to search for the linked data object and the result of the search for the linked data object, said distinguishing characteristics including file extensions or file names that identify the linked object and said result providing the address of the linked object, whether the linked data object exists or is incomplete, and whether the linked data object is currently being accessed;
a read function field identifying instructions for reading the respective linked data object and the result of reading the linked data object, wherein the result of reading the linked data object includes data extracted from the linked data object, said data including the values of parameters in the linked data object.
The defined link may also include information specifying how to link to the remote system.

Optionally, the defined link further includes information specifying at least one application program interface for communicating with the source application. The method may include processing the information to display a project structure.

In general, in another aspect, a computer-program product, tangibly stored on machine-readable media and in accordance with the invention, includes instructions for causing a processor to perform the method according to the first aspect.

Optionally, the link information further includes information specifying at least one application program interface for communicating with the source application. The product also includes instructions to extract information from the data object by using the link information and to develop an electronically accessible map of a project based upon the information extracted from the data object.

In general, in another aspect, a system linking data objects maintained by more than one source application in more than one remote systems, the system comprising:
a project development application; and
an object link storage including object links identifying data objects linked to the project development application, the data objects, said object links including:
   a first link to a first data object maintained by a first source application in a first system, said first link including information specifying a location of the first data object;
   a second link to a second data object maintained by a second source application in a second system, said second link including information specifying a location of the second data object; and
a programmable processor executing the method according to the first aspect.

Particular implementations of the invention can provide any combination of the following features. A system in accordance with the invention can access information of data objects of other systems (i. e. , remote systems) without having to keep local duplicates of the data objects.

When the system includes a project development application, the system can define links between data objects of various other systems and one or more projects maintained by the project development application. For example, the system can define a link between a manufacturing project and a data object that represents a bill of materials for a certain product even when such a data object is maintained by and resides at a remote system. The system can define another link between the manufacturing project and another data object that is maintained by and resides at a remote system and that includes instructions for assembling the product from the materials specified by the bill of materials. To define a link, the system can optionally use a simple text field that identifies the data object, including specifying the data object's address.

The system can perform existence checks to ensure that the system can link to the data object even when the remote system has changed the data object. When the system cannot find the data object, the system warns that the data object is not found. When the system cannot access the data object, the system warns that the data object is not accessible.

The system can perform consistency checks to ensure that data objects and their respective links are consistent with each other as well as other information in the system. For example, the system can check whether a data object is actually of a certain type as specified by information the system maintains.

The system allows a user to read, manipulate, and display information of data objects of remote systems from within a local application, such as the project development application that resides on the system. That is, the system allows the user to perform operations, like those listed, by using an application such as the project development application.

Given specific search criteria, the system can search for data objects of different systems that satisfy the search criteria. The system ascertains and maintains a table of linked data objects that can be searched.

The details of one or more implementations are set forth in the accompanying drawings and the description below. Other features and advantages will be apparent from the description and drawings.

### DESCRIPTION OF DRAWINGS

FIG. 1 shows a method, in accordance with the invention, for accessing data objects of remote systems.
FIG. 2 shows a system in accordance with the invention.
FIG. 3 shows one example of an object-link storage.
FIG. 4 shows a project development system in accordance with the invention.
FIG. 5 shows another project development system in accordance with the invention.
FIG. 6 shows an example of an object repository.
FIG. 7 shows a method, in accordance with the invention, for developing a project.
FIG. 8 shows another method, in accordance with the invention, for developing a project.
FIG. 9 shows another method, in accordance with the invention, for developing a project.
FIG. 10 shows an example of an object link table.
FIG. 11 shows an example of an object link.
FIG. 12 shows a method, in accordance with the invention, for linking to a particular data object with a project development system.
FIG. 13 shows a computer network system, in accordance with the invention, for managing a project including data objects originating from more than one system.

Like reference symbols in the various drawings indicate like elements.

### DETAILED DESCRIPTION

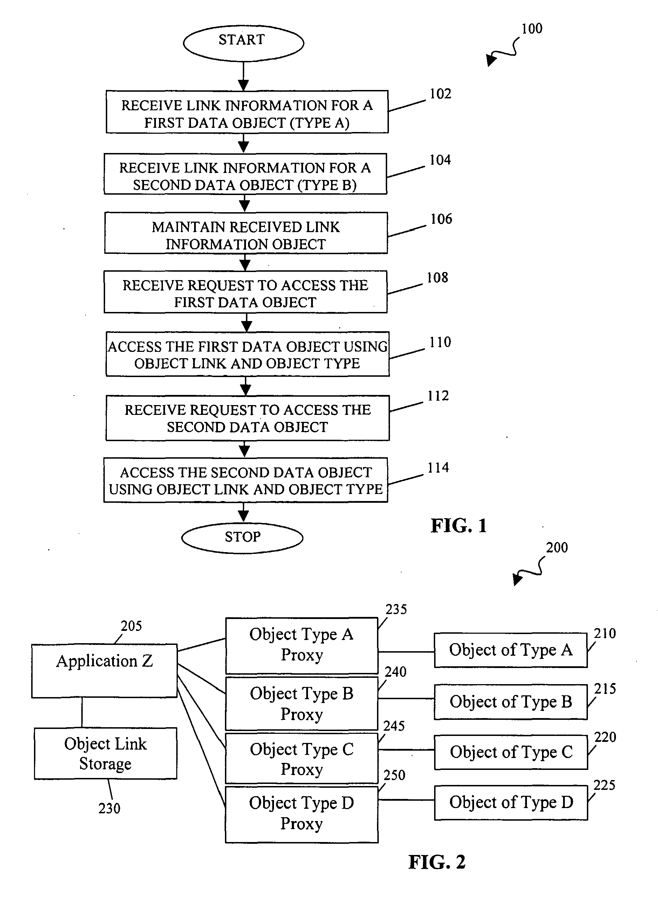

FIG. 1 shows a method 100, in accordance with the invention, for accessing data objects of remote systems. As shown, the system receives link information for a first data object of a first remote system (step 102). The link information includes, for example, information for locating the first data object such as a globally unique identifier and information for accessing the first data object such as information specifying an application program interface. The system can store the link information in an object link storage, which is further described below. The system receives link information for a second data object of a second remote system (step 104). The first and second remote systems can be different from each other as well as different from the system itself. The first and second data objects can be of different types and be created by different applications. The system maintains the received link information (step 106).

The system receives a request to access information of the first data object (step 108). In response to the request, the system accesses the first data object using the object link information to locate the first data object and to extract information from the first data object (step 110). The system receives a request to access to the second data object (step 112). In response, the system accesses the second data object using the object link information (step 114).

As shown in FIG. 2, a system 200 in accordance with the invention includes an application of type Z 205, a collection of objects 210, 215, 220, and 225, and an object-link storage 230. The application of type Z 205 is a set of executable instructions that access objects 210, 215, 220, and 225 to execute. Objects 210, 215, 220, and 225 originate from remote and different software systems, namely systems A, B, C, and D respectively. The object link storage 230 stores a collection of object links that identify objects 210, 215, 220, and 225 to the application of type Z 205. The object links can include, e.g., the location of objects 210, 215, 220, and 225, information needed to locate objects 210, 215, 220, and 225, information needed to access objects 210, 215, 220, and 225, and information identifying the object type of objects 210, 215, 220, and 225.

In operation, the application of type Z 205 links to objects 210,215, 220, and 225 through a collection of proxy program interfaces 235,240, 245, and 250 to communicate with objects 210.215, 220, and 225. Proxy program interfaces 235,240, 245, and 250 can be formed by executing instructions such as, e. g., application program interfaces (APIs) that are called from the systems from which objects 210,215, 220, and 225 originated. The APIs can be identified in the object links for each object 210,215, 220, and 225.

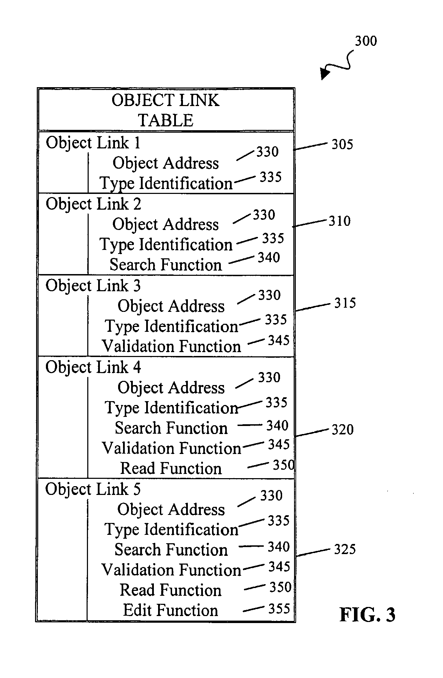

As shown in FIG 3, object link storage 230 can be implemented as a table 300 of object links 305,310, 315,320, and 325 that identify various objects originating from different software systems. Object links 305,310, 315,320, and 325 can also identify characteristics of the objects included in the program structure and information regarding accessing the objects. Such information includes, e. g. , addresses of objects 210,215, 220, and 225, the names or other identification information for locating objects 210,215, 220, and 225, the object type of objects 210,215, 220, and 225, and identification information for locating APIs or other executable instructions for accessing objects 210, 215, 220, and 225.

Object links ("link"or"links") 305,310, 315,320, and 325 each include an object address field 330 that describes the memory location of linked objects such as objects 210,215, 220, and 225. Links 305,310, 315, 320, and 325 can also include a type identification field 335 that identifies the object type of the linked object.

Link 310 includes a search function field 340. The search function field 340 identifies distinguishing characteristics of the linked object that can be used to search for the linked object. The search function field 340 can also provide the result of a search for the linked object, or both distinguishing characteristics and the result of a search. Example search results include the address of the linked object, whether the linked object exists or is complete, and whether the linked object is currently being accessed. Distinguishing characteristics can include file extensions or file names that identify the linked object

Link 315 optionally includes a validation function field 345. The validation function field 345 identifies a validation engine for validating the linked object, provides the result of a validation of the linked object, or both. The object type, the object constituent data, and the correspondence with project timelines of the linked object, e. g., can be validated.

Link 320 includes a read function field 350. The read function field 350 identifies or includes instructions for reading the finked object. The read function field 350 can also identify the result of reading the linked object. The instructions can be, e. g. , application program interfaces that are called from the system from which object 210,215, 220, and 225 originated. The result of reading the linked object can include data extracted from the linked object. Extracted data can include the values of certain parameters in the linked object. An extensible stylesheet language ("XSL") transformation ("XSLT") can be used to arrange the data extracted from objects 210, 215, 220, and 225 for display by application of type Z 205.

Link 325 optionally includes an edit function field 355. The edit function field 355 identifies instructions for editing the linked object or includes instructions for editing the linked object. The instructions can be, e. g., application program interfaces that are called from the system from which object 210,215, 220, and 225 originated. An application, such as application Z 205 or a project development application, is thus able to receive and apply edits to the object linked by link 325 using the information in edit function 355.

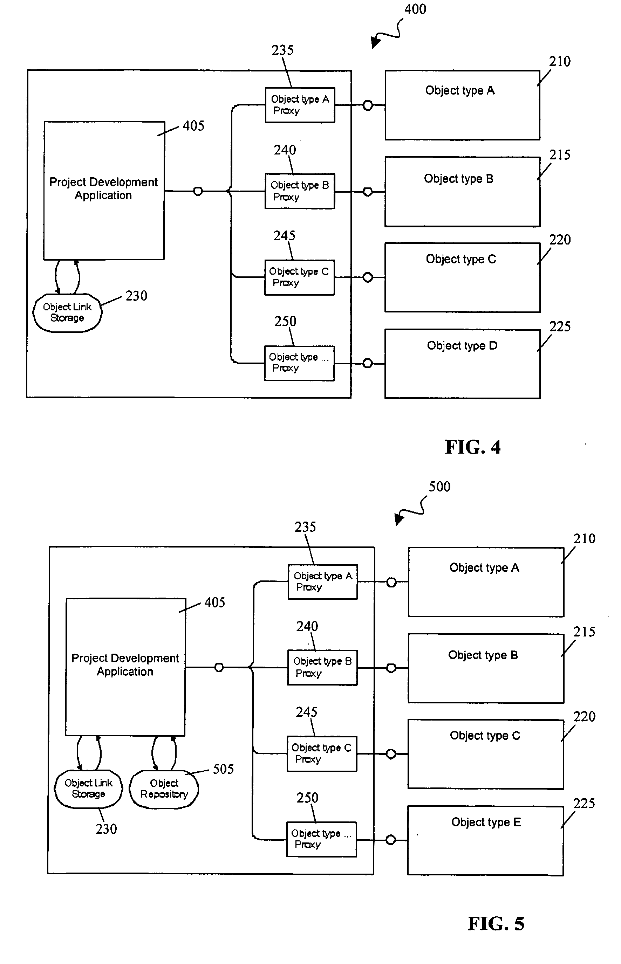

FIG 4 shows a project development system 400 that is one example of a system that uses data objects originating from different systems in accordance with the invention.

The project development system 400 includes a project development application 405 and a collection of objects 210, 215, 220, and 225 originating from different systems. The project development application 405 provides program instructions executable by, for example, a computer processor to develop a project and map real-world aspects of a project into a computer-accessible format. The project development system 400 includes an object link storage such as the described object link storage 230.

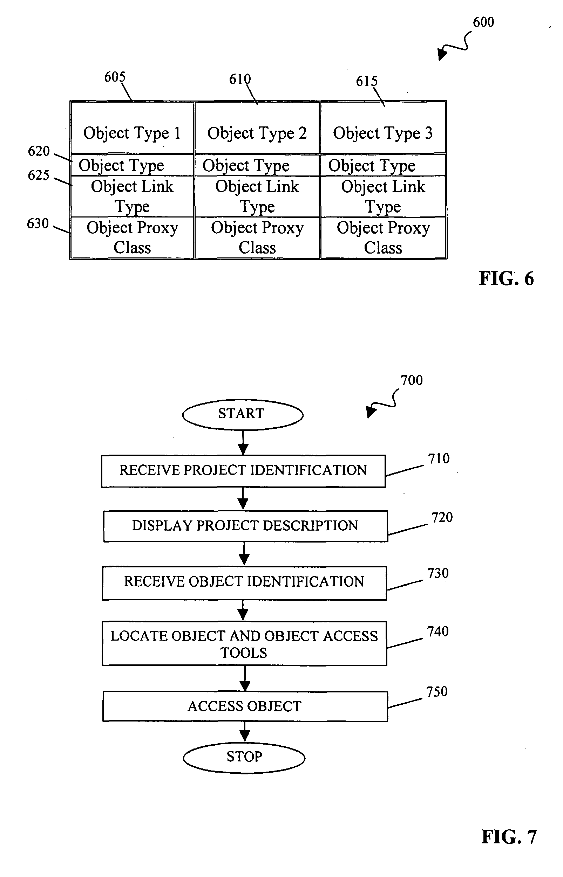

As shown in FIG 5, another project development system 500 in accordance with the invention includes an object repository 505 that stores a collection of descriptions of linkable object types that are accessible by project development application 405. As shown in FIG. 6, the collection of descriptions can be a table 600. The table 600 includes three different descriptions of linkable object types, namely object type 1 (item 605), object type 2 (item 610), and object type 3 (item 615). Each object type 605, 610, and 615 includes an object type field 620, an object-link type field 625, and a proxy class field 630. Object type field 620 describes the origination system of object types 605, 610, and 615. The object link type field 625 describes the one or more types of links, for example, links 305,310, 315,320, and 325, that are available for objects of object type 605,610,

615. Proxy class name field 620 describes the class of one or more proxy interfaces such as proxies 235, 240, 245, and 250 that implement an interface between objects 210, 215, 220, and 225 and the project development application 405.

FIG. 7 shows a method 700, in accordance with the invention, for interfacing a project development application, such as the project development application 405, with objects 210, 215, 220, and 225 to develop a project. As shown, the project development application receives a project identifier from a user identifying a project of interest (step 710). The project development application causes information about the identified project to be displayed for the user (step 720). The displayed information can include, for example, a timeline of the project, a list of various tasks to be completed or components to be assembled during the project, and results to be generated during the project. The project development application receives an object identifier that identifies an object originating from an application other than the project development application (step 730). The object identifier can be received from the user. The project development application locates the identified object and the tools necessary for accessing the identified object (step 740). Locating the identified object can include, e.g., identifying a hypertext transfer protocol (HTTP) address of the object using the corresponding object link 305, 310, 315, 320, or 325. Locating the identified object can include, e.g., searching for the object using a distinguishing characteristic of the object, locating the tools necessary for accessing the identified object, and identifying tools for searching, validating, reading and/or writing to the identified object. The tools can be included in the corresponding object link 305, 310, 315, 320, and 325 or they can be separate executable instructions included in the project development application for interfacing with the identified object.

In response to the location of the identified object and tools for accessing the object, the project development application accesses the object to manage the identified project (step 750). Accessing the identified object includes implementing an interface between the identified object and the project development application or reading the results of previous interfaces, including searches and validations, between the identified object and the project development application.

Accessing data of the data objects can be performed by calling synchronous or asynchronous APIs. Accessing the identified object allows a user to, e.g., include a flag on a timeline that indicates whether or not a component or task described in the identified object is complete, or open the identified object so that a user may edit and complete the object. Accessing the identified object can also allow the project development application to trigger flags for the user when the accessed object does not meet the requirements of the identified project.

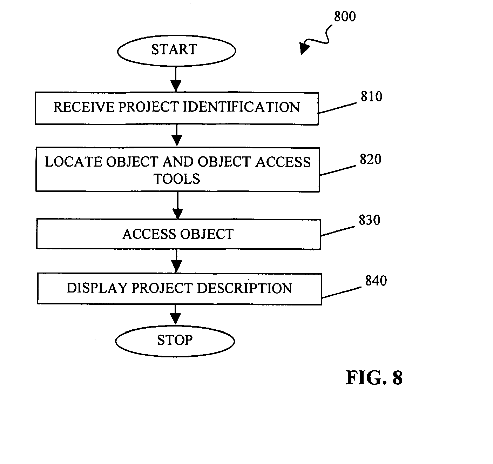

FIG. 8 shows another method 800, in accordance with the invention, for developing a project that includes objects 210, 215, 220, and 225 with a project development system, such as systems 400 and 500. As shown, the project development system receives a project identifier from a user identifying a project of interest (step 810). In response to the reception of the project identifier, the project development system locates one or more objects 210, 215, 220, and 225 in the program structure and the tools necessary for accessing the objects (step 820). The project development system then accesses the located object or objects (step 830) and causes the portions of the located object or objects to be included in a display of the project description (step 840).

The located object or objects in step 830 can be accessed synchronously or asynchronously. That is, accessing the located object or objects in step 830 can also include implementing an interface between the object and the project development application or reading the results of previous interfaces between the identified object and the project development system. The following describes three example methods for accessing data of the linked objects.

### Obtaining Data Online

In order to display data of the linked objects in a project development application of the project development system, synchronous APIs are called from systems in which the linked objects are located. This can occur when a user opens a project of interest using the project development application or, alternatively, when the user navigates to the linked object.

### Storing Summarized Information in an XML Data Extract

To access data of the linked objects without hindering the performance of the local system while not being dependent on the availability of the remote systems, the project development system can store selected attributes of the original object (which is located at a remote system) as well as summarized information about user-defined key figures in an XML data extract. The project development system can rebuild the XML data extract online (synchronously) as well as in a batch (asynchronously). The system can use the attributes in the XML data extract to determine key figures for reporting accessed data. The key figures can trigger alerts in the system when a defined threshold value has been violated. The system can display the alerts in the project development application (e.g., by using traffic lights).

### Storing Selected Data Together with the Object Link

The system can save selected attributes, such as a description of the linked object, together with the object link directly in the application. The described three examples can be used in any combination.

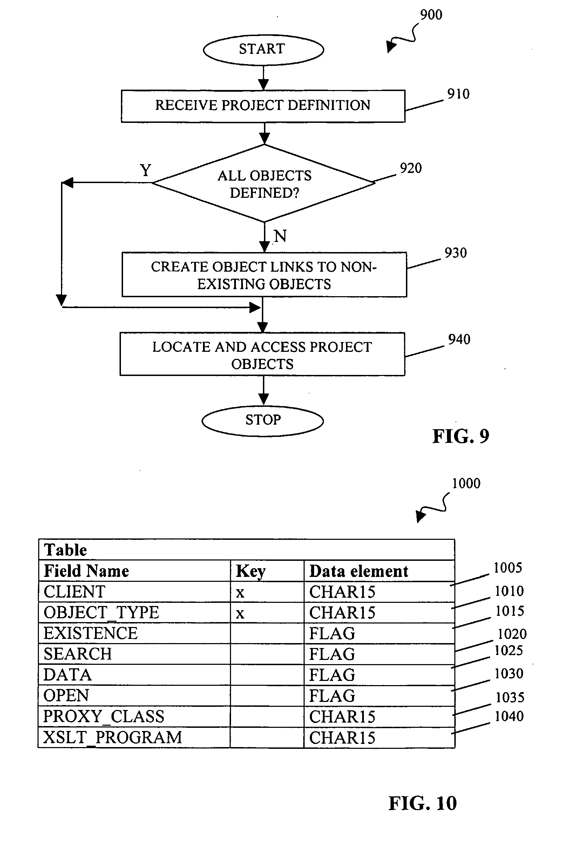

FIG. 9 shows another method 900, in accordance with the invention, for developing a project. A project development system, such as systems 400 and 500, receives a definition of the project (step 910). The received definition can include, for example, start, stop, and milestone dates, constituent objects such as tasks, components, and results, and personnel responsible for the constituent objects. If the received project definition includes constituent objects that are not yet defined (decision 920), then the project development system creates object links for these non-existing objects (step 930). The created object links are used to locate and access even these non-existing objects to manage the project (step 940). For example, if an object has not yet been created, then the project development system identifies this from the object link and uses the information in an evaluation of the project for a user. The project development system can also locate objects by searching for distinguishing characteristics of the object that identify the object. These distinguishing characteristics can be included in the object link. If the received definition does not include constituent objects that are undefined, then the system skips step 930 and proceeds to step 940.

FIG. 10 shows an example of an object link table 1000 that describes linkable object types in, e.g., object link repository 230. Object link table 1000 includes a client field 1005, an object type field 1010, an existence field 1015, a search field 1020, a data field 1025, an open field 1030, a proxy class field 1035, and an XSLT program field 1040.

Client field 1005 identifies a client and is part of the key of object link table 1000. Object type field 1010 is a character string that identifies the object type and is part of the key of object link table 1000. Existence field 1015 is a flag that identifies whether the existence of objects of the object type can be validated. Search field 1020 is a flag that identifies whether objects of the object type can be searched. If the object type supports a search, instructions for searching the object type can also be identified. Data field 1025 is a flag that identifies whether data can be extracted from objects of the object type. Open field 1030 is a flag that identifies whether objects of the object type can be opened in the source system to, e.g., edit the object. Proxy class field 1035 is a character string field that identifies executable instructions that implement an interface for objects of this object type. XSLT program field 1040 is a character string field that identifies the name of an XSLT program, for example, a SAP program object, that transforms the layout of data from objects of this object type.

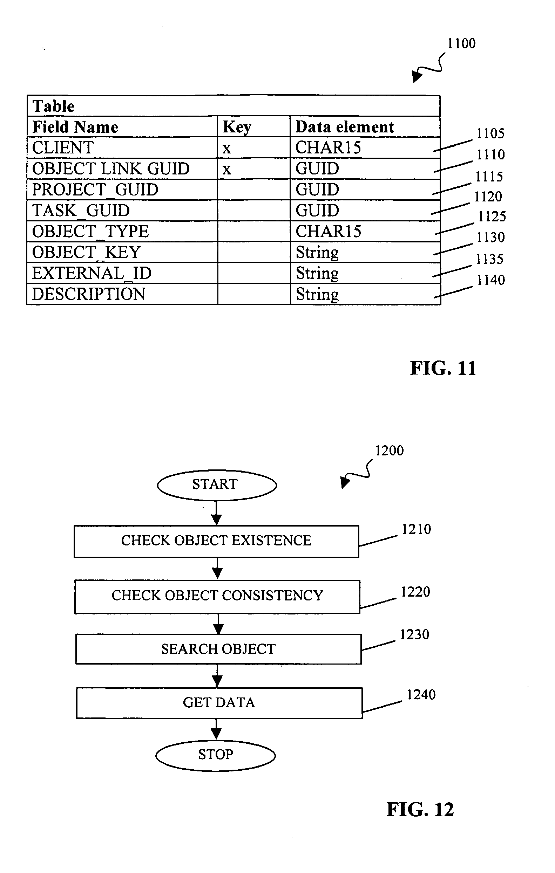

FIG. 11 shows an example of an object link 1100 that identifies an object. Object link 1100 includes a client field 1105, an object link globally unique identifier ("GUID") field 1110, a project GUID field 1115, a task GUID field 1120, an object type field 1125, an object key field 1130, an external identification field 1135, and a description field 1040.

Client field 1105 identifies a client and is part of the key of object link table 1100. The object-link GUID field 1110 is an alphanumeric identifier that indicates the location of the identified object. The project GUID field 1115 is an alphanumeric identifier that indicates the project to which the identified object belongs. The task GUID field 1120 is an alphanumeric identifier that indicates the task to which the identified object belongs. The object type field 1125 is a character string that identifies the object type of the identified object. The object key field 1130 is a string that identifies the internal key of the identified object. The external ID field 1135 is a string that identifies the external key of the identified object. The description field 1140 is a string that provides a description of the identified object. The description can be available in several languages.

FIG. 12 shows a method 1200, in accordance with the invention, for linking to a particular object with a project development system such as systems 400 and 500. As shown, the project development system first checks for the existence of the particular object (step 1210). Once the existence of the particular object is confirmed, the project development system checks the particular object for consistency with expectations (step 1220). For example, the project development system can expect the particular object to be of a particular type, based upon information in object link storage 230. Once consistency of the particular object with expectations has been confirmed, the project development system searches the particular object (step 1230) and extracts selected data from the particular object (step 1240).

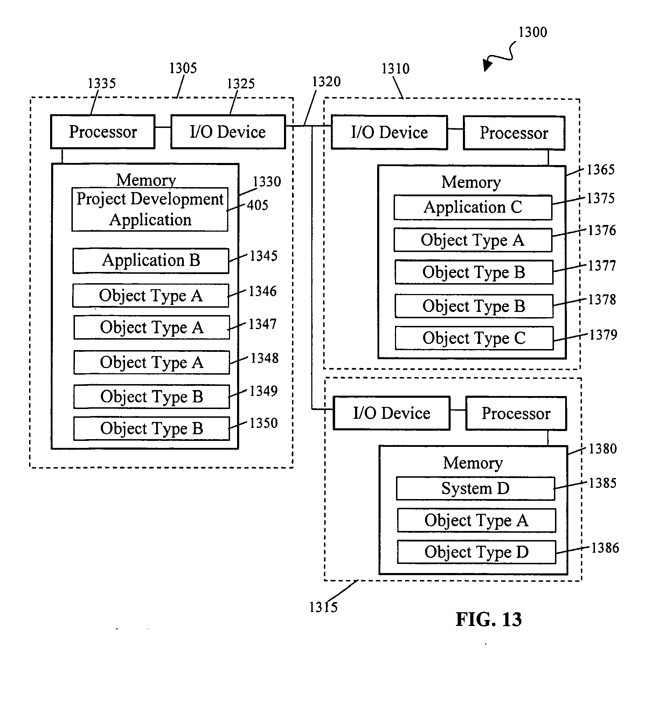

FIG. 13 shows a computer network system 1300, in accordance with the invention, for managing a project including objects originating from more than one system. The computer network system 1300 includes a project management system 1305, a second system 1310, and a third system 1315, all capable of communicating with each other over a data communications network 1320. The project management system 1305 includes a network I/O device 1325, a memory 1330, and a processor 1335. The I/O device 1325 encodes and decodes communications with systems 1310 and 1315 over network 1320. The memory 1330 stores program instructions for applications such as project development application 405 and a second application B 1345. Application B 1345 can be, e.g., an enterprise resource planning application such as SAP R/3. The memory 1330 also stores a series of objects of type A, such as objects 1346, 1347, and 1348, that originate from the project development application 405. The memory also stores a series of objects of type B, such as objects 1349 and 1350, that originate from the application B 1345. The processor 1330 receives incoming communications from network I/O device 1325 and provides outgoing communications to network I/O device 1325, performs read and write operations on memory 1330, and executes the program instructions for the project development application 405. The described objects, both type A and type B, are included in a project structure managed by the project development application 405.

Systems 1310 and 1315 can also store objects that are included in the project structure managed by the project development application 405. The system 1310 includes a memory 1365 that can store objects of type A, such as object 1376, objects of type B, such as objects 1377 and 1378, and objects of type C, such as object 1379, all of which can be included in the project structure of the project development application 405. Objects of type C originates from an application C 1375 that is stored on memory 1365 of system 1310. Similarly, system 1315 includes a memory 1380 that stores an object of type D 1386 that originates from an application D 1385. The object 1386 can be included in the project structure of the project development application 405. In response to the execution of project development application 405 which allows a user to manage a project, the project development application 405 interfaces with: Objects of type A, such as objects 1346, 1347, 1348, and 1376; objects of type B, such as objects 1349, 1350, 1377, and 1378; objects of type C, such as object 1378; and objects of type D, such as object 1386. Note that it is not necessary for the objects to be located at the system 1305 in order to form such an interface.

The invention can be implemented in digital electronic circuitry, or in computer hardware, firmware, software, or in combinations of them. Apparatus of the invention can be implemented in a computer program product tangibly embodied in a machine-readable storage device for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. The essential elements of a computer are a processor for executing instructions and a memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

A number of implementations have been described. Nevertheless, it will be understood that various modifications may be made. For example, the system is not limited to being a project development system but, rather, can be any system that benefits from having access to data objects of remote systems. Data objects can be a business object that defines a business problem or its solution, or used to model a portion of the business domain or a specific problem to be solved. The data objects in the project structure can all be stored at a single central system, such as the local system of a project development application. Alternatively, the objects can be distributed among various independent and separated systems. When all the data objects of interest are located at a local system, the system need not maintain information for linking to remote systems. Object links and object types can be stored in other data structures, including trees and other hierarchical structures.

## Claims

1. A method for linking data objects maintained by more than one source application in more than one remote systems, the method comprising:
defining a first link (305) to a first data object (210) maintained by a first source application in a first system, said first link (305) including information specifying a location of the first data object (330);
defining a second link (310, 315, 320, 325) to a second data object (215, 220, 225) maintained by a second source application in a second system, said second link (310, 315, 320, 325) including information specifying a location of the second data object (215, 220, 225); and
accessing data from the first data object (210) using the first link (305) and accessing data from the second data object (215, 220, 225) using the second link (310, 315, 320, 325) upon data requests from a project development application (Z205; 405),
said method being **characterized in that** the first defined link (305) and the second defined link (310, 315, 320, 325) each includes: a search function field (340) providing
distinguishing characteristics of the respective linked data object (210, 215, 220, 225) that can be used to search for the linked data object (210, 215, 220, 225) and the result of the search for the linked data object (210, 215, 220, 225), said distinguishing characteristics including file extensions or file names that identify the linked object and said result including
the address of the linked object, whether the linked data object (210, 215, 220, 225) exists or is incomplete, and whether the linked data object (210, 215, 220, 225) is currently being accessed;
a read function field (350) identifying instructions for reading the respective linked data object (210, 215, 220, 225) and the result of reading the linked data object (210, 215, 220, 225), wherein the result of reading the linked data object (210, 215, 220, 225) includes data extracted from the linked data object (210, 215, 220, 225), said data including the values of parameters in the linked data object (210, 215, 220, 225),

2. The method of claim 1, wherein the first defined link (305) includes:
information specifying how to link to the first system; and/or
information specifying at least one application program interface for communicating with the first data object (210).

3. The method of claim 1 or 2, wherein:
the first system is remote to a further system that includes the
project development application (Z205; 405).

4. The method of anyone of claims 1 to 3, further comprising:
searching for the first data object in the first system using information from the first link (305).

5. The method of anyone of claims 1 to 4, further comprising:
storing a first link class description describing characteristics of a first link class that includes the first defined link (305); and
storing a second link class description describing characteristics of a second link class that includes the second defined link (310, 315, 320, 325).

6. The method of anyone of claims 1 to 5, further comprising:
validating the first defined link (305) with the first link class description.

7. The method of anyone of claims 1 to 7, wherein the first link is rebuild synchronously.

8. A computer program product, tangibly stored on machine-readable media, comprising instructions for causing a processor to perform the method of anyone of claims 1 to 7.

9. A system (200; 400; 500) for linking data objects maintained by more than one source application in more than one remote systems, the system comprising:
a project development application (Z205; 405); and
an object link storage (230) including object links identifying data objects (210, 215, 220, 225) linked to the project development application, said object links including:
a first link (305) to a first data object (210) maintained by a first source application in a first system, said first link (305) including information specifying a location of the first data object (330);
a second link (310, 315, 320, 325) to a second data object (215, 220, 225) maintained by a second source application in a second system, said second link (310, 315, 320, 325) including information specifying a location of the second data object (215, 220, 225); and
a programmable processor executing the method according to any one of the claims 1 to 7.

10. The system (200; 400; 500) of claim 9, wherein:
the object link includes information specifying how to communicate with the one or more remote systems.

11. The system (200; 400; 500) of claim 9 or 10, wherein:
the object link includes information specifying an application program interface with which the project development application (Z205; 405) can communicate with an identified data object (210, 215, 220, 225).

## Patentansprüche

1. Verfahren zum Verknüpfen von Datenobjekten, die von mehr als einer Quellenanwendung in mehr als einem entfernt angeordneten System verwaltet werden, wobei das Verfahren umfasst:
Festlegen einer ersten Verknüpfung (305) mit einem ersten Datenobjekt (210), das von einer ersten Quellenanwendung in einem ersten System verwaltet wird, wobei die erste Verknüpfung (305) Information zum Spezifizieren eines Ortes des ersten Datenobjektes (330) beinhaltet,
Festlegen einer zweiten Verknüpfung (310, 315, 320, 325) mit einem zweiten Datenobjekt (215, 220, 225), das von einer zweiten Quellenanwendung in einem zweiten System verwaltet wird, wobei die zweite Verknüpfung (310, 315, 320, 325) Information zum Spezifizieren eines Ortes des zweiten Datenobjektes (215, 220, 225) beinhaltet; und
Zugreifen auf Daten von dem ersten Datenobjekt (210) unter Verwendung der ersten Verknüpfung (305) und Zugreifen auf Daten von dem zweiten Datenobjekt (215, 220, 225) unter Verwendung der zweiten Verknüpfung (310, 315, 320, 325) bei Datenanforderungen von einer Projektentwicklungsanwendung (Z205; 405),
wobei das Verfahren **dadurch gekennzeichnet ist, dass** die erste festgelegte Verknüpfung (305) und die zweite festgelegte Verknüpfung (310, 315, 320, 325) jeweils beinhalten:
ein Suchfunktionsfeld (340) zum Bereitstellen von unterscheidenden Eigenschaften des jeweiligen verknüpften Datenobjektes (210, 215, 220, 225) mit Verwendbarkeit zur Suche nach dem verknüpften Datenobjekt (210, 215, 220, 225) und des Ergebnisses der Suche nach dem verknüpften Datenobjekt (210, 215, 220, 225), wobei die unterscheidenden Eigenschaften Dateierweiterungen oder Dateinamen beinhalten, die das verknüpfte Objekt und das Ergebnis identifizieren, darunter die Adresse des verknüpften Objektes, dasjenige, ob das verknüpfte Datenobjekt (210, 215, 220, 225) existiert oder unvollständig ist, und dasjenige, ob auf das verknüpfte Datenobjekt (210, 215, 210, 225) aktuell zugegriffen wird;
ein Lesefunktionsfeld (350) zum Identifizieren von Anweisungen zum Lesen des jeweiligen verknüpften Datenobjektes (210, 215, 220, 225) und des Ergebnisses des Lesens des verknüpften Datenobjektes (210, 215, 220, 225), wobei das Ergebnis des Lesens des verknüpften Datenobjektes (210, 215, 220, 225) Daten beinhaltet, die aus dem verknüpften Datenobjekt (210, 215, 220, 225) extrahiert sind, wobei die Daten die Werte von Parametern in dem verknüpften Datenobjekt (210, 215, 220, 225) beinhalten.

2. Verfahren nach Anspruch 1, wobei die erste festgelegte Verknüpfung (305) beinhaltet:
Information zum Spezifizieren, wie mit dem ersten System verknüpft werden soll; und/oder
Information zum Spezifizieren wenigstens einer Anwendungsprogrammschnittstelle zum Kommunizieren mit dem ersten Datenobjekt (210).

3. Verfahren nach Anspruch 1 oder 2, wobei:
das erste System von einem weiteren System, das die Projektentwicklungsanwendung (Z205; 405) beinhaltet, entfernt angeordnet ist.

4. Verfahren nach einem der Ansprüche 1 bis 3, des Weiteren umfassend:
Suchen nach dem ersten Datenobjekt in dem ersten System unter Verwendung von Information von der ersten Verknüpfung (305).

5. Verfahren nach einem der Ansprüche 1 bis 4, des Weiteren umfassend:
Speichern einer ersten Verknüpfungsklassenbeschreibung zum Beschreiben von Eigenschaften einer ersten Verknüpfungsklasse, die die erste festgelegte Verknüpfung (305) beinhaltet; und
Speichern einer zweiten Verknüpfungsklassenbeschreibung zum Beschreiben von Eigenschaften einer zweiten Verknüpfungsklasse, die die zweite festgelegte Verknüpfung (310, 315, 320, 325) beinhaltet.

6. Verfahren nach einem der Ansprüche 1 bis 5, des Weiteren umfassend:
Validieren der ersten festgelegten Verknüpfung (305) mit der ersten Verknüpfungsklassenbeschreibung.

7. Verfahren nach einem der Ansprüche 1 bis 7, wobei die erste Verknüpfung synchron neuaufgebaut wird.

8. Computerprogrammerzeugnis, das physisch auf computerlesbaren Medien gespeichert ist, umfassend Anweisungen zum Veranlassen, dass ein Prozessor das Verfahren nach einem der Ansprüche 1 bis 7 ausführt.

9. System (200; 400; 50Q) zum Verknüpfen von Datenobjekten, die von mehr als einer Quellenanwendung in mehr als einem entfernt angeordneten System verwaltet werden, wobei das System umfasst:
eine Projektentwicklungsanwendung (Z205; 405); und
einen Objektverknüpfungsspeicher (230), der Objektverknüpfungen beinhaltet, die Datenobjekte (210, 215, 220, 225) identifizieren, die mit der Projektentwicklungsanwendung verknüpft sind,
wobei die Objektverknüpfungen beinhalten:
eine erste Verknüpfung (305) mit einem ersten Datenobjekt (210), das von einer ersten Quellenanwendung in einem ersten System verwaltet wird, wobei die erste Verknüpfung (305) Information zum Spezifizieren eines Ortes des ersten Datenobjektes (310) beinhaltet;
eine zweite Verknüpfung (310, 315, 320, 325) mit einem zweiten Datenobjekt (215, 220, 225), das von einer zweiten Quellenanwendung in einem zweiten System verwaltet wird, wobei die zweite Verknüpfung (310, 315, 320, 325 Information zum Spezifizieren eines Ortes des zweiten Datenobjektes (215,2 220, 225) beinhaltet; und
einen programmierbaren Prozessor zum Ausführen des Verfahrens nach einem der Ansprüche 1 bis 7.

10. System (200; 400; 500) nach Anspruch 9, wobei:
die Objektverknüpfung Information zum Spezifizieren dessen beinhaltet, wie mit dem einen oder den mehreren entfernt angeordneten Systemen kommuniziert werden soll.

11. System (200; 400; 500) nach Anspruch 9 oder 10, wobei:
die Objektverknüpfung Information zum Spezifizieren einer Anwendungsprogrammschnittstelle beinhaltet, über die die Projektentwicklungsanwendung (Z205; 405) mit einem identifizierten Datenobjekt (210, 215, 220, 225) kommunizieren kann.

## Revendications

1. Procédé de liaison d'objets-données maintenus par plus d'une application source dans plus d'un système à distance, le procédé comprenant :
définir une première liaison (305) à un premier objet-données (210) maintenu par une première application source dans un premier système, ladite première liaison (305) incluant des informations spécifiant un emplacement du premier objet-données (330) ;
définir une seconde liaison (310, 315, 320, 325) à un second objet-données (215, 220, 225) maintenu par une seconde application source dans un second système, ladite seconde liaison (310, 315, 320, 325) incluant des informations spécifiant un emplacement du second objet-données (215, 220, 225) ; et
accéder à des données provenant du premier objet-données (210) en utilisant la première liaison (305) et accéder à des données provenant du second objet-données (215, 220, 225) en utilisant la seconde liaison (310, 315, 320, 325) suite à des requêtes de données provenant d'une application de développement de projets (Z205 ; 405),
ledit procédé étant **caractérisé en ce que** la première liaison définie (305) et la seconde liaison définie (310, 315, 320, 325) incluent chacune :
un champ de fonction de recherche (340) fournissant des caractéristiques distinctives de l'objet-données lié respectif (210, 215, 220, 225) qui peuvent être utilisées pour rechercher l'objet-données lié (210, 215, 220, 225) et le résultat de la recherche de l'objet-données lié (210, 215, 220, 225), lesdites caractéristiques distinctives incluant des extensions de fichier ou noms de fichier qui identifient l'objet lié et ledit résultat incluant l'adresse de l'objet lié, le fait que l'objet-données lié (210, 215, 220, 225) existe ou soit incomplet, et le fait que l'objet-données lié (210, 215, 220, 225) soit actuellement en train d'être accédé ;
un champ de fonction de lecture (350) identifiant des instructions pour lire l'objet-données lié respectif (210, 215, 220, 225) et le résultat de la lecture de l'objet-données lié (210, 215, 220, 225), dans lequel le résultat de la lecture de l'objet-données lié (210, 215, 220, 225) inclut des données extraites de l'objet-données lié (210, 215, 220, 225), lesdites données incluant les valeurs de paramètres dans l'objet-données lié (210, 215, 220, 225).

2. Procédé selon la revendication 1, dans lequel la première liaison définie (305) inclut :
des informations spécifiant comment établir la liaison au premier système ; et/ou des informations spécifiant au moins une interface de programme d'application pour communiquer avec le premier objet-données (210).

3. Procédé selon la revendication 1 ou 2, dans lequel :
le premier système est à distance d'un autre système qui inclut l'application de développement de projets (Z205 ; 405).

4. Procédé selon l'une quelconque des revendications 1 à 3, comprenant en outre :
chercher le premier objet-données dans le premier système en utilisant des informations provenant de la première liaison (305).

5. Procédé selon l'une quelconque des revendications 1 à 4, comprenant en outre :
stocker une première description de catégorie de liaison décrivant des caractéristiques d'une première catégorie de liaison qui inclut la première liaison définie (305) ; et
stocker une seconde description de catégorie de liaison décrivant des caractéristiques d'une seconde catégorie de liaison qui inclut la seconde liaison définie (310, 315, 320, 325).

6. Procédé selon l'une quelconque des revendications 1 à 5, comprenant en outre :
valider la première liaison définie (305) avec la première description de catégorie de liaison.

7. Procédé selon l'une quelconque des revendications 1 à 7, dans lequel la première liaison est reconstruite de manière synchrone.

8. Produit de programme informatique, stocké de manière tangible sur des supports lisibles par machine, comprenant des instructions pour amener un processeur à réaliser le procédé selon l'une quelconque des revendications 1 à 7.

9. Système (200 ; 400 ; 500) de liaison d'objets-données maintenus par plus d'une application source dans plus d'un système à distance, le système comprenant :
une application de développement de projets (Z205 ; 405) ; et
un stockage de liaison d'objets (230) incluant des liaisons d'objets identifiant des objets-données (210, 215, 220, 225) liés à l'application de développement de projets, lesdites liaisons d'objets incluant :
une première liaison (305) à un premier objet-données (210) maintenu par une première application source dans un premier système, ladite première liaison (305) incluant des informations spécifiant un emplacement du premier objet-données (330) ;
une seconde liaison (310, 315, 320, 325) à un second objet-données (215, 220, 225) maintenu par une seconde application source dans un second système, ladite seconde liaison (310, 315, 320, 325) incluant des informations spécifiant un emplacement du second objet-données (215, 220, 225) ; et
un processeur programmable exécutant le procédé selon l'une quelconque des revendications 1 à 7.

10. Système (200 ; 400 ; 500) selon la revendication 9, dans lequel :
la liaison d'objets inclut des informations spécifiant comment communiquer avec le ou les systèmes à distance.

11. Système (200 ; 400 ; 500) selon la revendication 9 ou 10, dans lequel :
la liaison d'objets inclut des informations spécifiant une interface de programme d'application avec laquelle l'application de développement de projets (Z205 ; 405) peut communiquer avec un objet-données identifié (210, 215, 220, 225).
